# FASCICULE DE BREVET EUROPEEN

(11) **EP 4 514 637 B1**
(45) Date de publication et mention de la délivrance du brevet: **18.02.2026**
(21) Numéro de dépôt: 23720916.8
(22) Date de dépôt: 27.04.2023
(51) Int. Cl.: B60J 10/22, B60J 10/84, B60J 10/86

(54) **JOINT D'ÉTANCHÉITÉ CINTRABLE POUR VÉHICULE AUTOMOBILE ET SON PROCÉDÉ DE FABRICATION**
BIEGBARE DICHTUNG FÜR EIN KRAFTFAHRZEUG UND VERFAHREN ZUR HERSTELLUNG DAVON
BENDABLE SEAL FOR A MOTOR VEHICLE, AND METHOD FOR MANUFACTURING SAME

(30) Priorité: 29.04.2022 FR 2204108
(43) Date de publication de la demande: 05.03.2025
(73) Titulaire: Cooper-Standard France, 35503 Vitre Cedex (FR)
(72) Inventeur: SARTONI, Romain, 35680 DOMALAIN (FR); LE DISSEZ, Désiré, 35150 PIRE-SUR-SEICHE (FR)
(74) Mandataire: Regimbeau
(86) Numéro de dépôt international: PCT/EP2023/061186
(87) Numéro de publication internationale: WO 2023/209129

(56) Documents cités:
- EP-B1- 3 409 522
- FR-A1- 2 588 035
- US-A1- 2008 148 646

## Description

### DOMAINE DE L'INVENTION

L'invention se situe dans le domaine des équipements de véhicules automobiles, tels que notamment les voitures, les camions ou les tracteurs.

La présente invention concerne plus précisément un joint d'étanchéité cintrable pour véhicule automobile, destiné à être positionné par exemple au niveau des ouvertures de la carrosserie ou sur les ouvrants (portes, capot et coffre) d'un véhicule automobile et plus précisément, sur des feuillures formées sur ces ouvertures ou ces ouvrants.

L'invention concerne également un procédé de fabrication de ce joint d'étanchéité.

### ETAT DE LA TECHNIQUE

On connaît déjà d'après l'état de la technique de tels joints d'étanchéité, qui comprennent une armature centrale métallique, autour de laquelle un matériau, par exemple en EPDM est coextrudé. Une telle armature métallique présente une structure ajourée avec une succession de structures pleines et ajourées, du type « arête de poisson ».

Toutefois, les nouveaux enjeux économiques et écologiques, liés à la réduction du poids des véhicules ainsi qu'à la recyclabilité de leurs composants, imposent de développer des joints d'étanchéité moins lourds et pouvant être plus facilement recyclés, notamment en supprimant les armatures métalliques initiales.

De plus, un tel joint d'étanchéité doit présenter une souplesse suffisante pour pourvoir être cintré et monté sur une feuillure arrondie d'une carrosserie (prise de rayon), et doit également pouvoir être retenu sur la feuillure et ne pas se détacher de celle-ci sur une large gamme de températures d'utilisation du véhicule.

On connait également d'après le document EP 3 409 522, un joint d'étanchéité pour véhicule automobile. Toutefois, ce joint ne comprend pas un profilé longitudinal à section transversale ouverte, réalisé en matériau thermoplastique rigide et comprenant des ondulations dont la concavité est orientée vers l'intérieur du profilé longitudinal.

Il s'en suit que ce joint ne permet pas d'assurer simultanément une bonne flexibilité pour épouser la forme du support sur lequel il est destiné à être placé et un bon pincement de ce support pour être retenu correctement sur celui-ci.

### EXPOSE DE L'INVENTION

L'invention a donc pour but de proposer un joint d'étanchéité pour véhicule automobile qui soit plus léger et plus facilement recyclable que ceux de l'art antérieur, qui puisse être appliqué sur des feuillures, y compris celles présentant un petit rayon de courbure et enfin, qui puisse venir pincer la feuillure et être retenu sur celle-ci, sur les plages d'utilisation usuelles du véhicule (c'est-à-dire généralement entre -30°C et 85°C).

A cet effet, l'invention concerne un joint d'étanchéité pour véhicule automobile comprenant un profilé longitudinal configuré pour être positionné sur un support du véhicule automobile, tel une feuillure, et au moins un élément en matériau élastomère, choisi parmi une lèvre longitudinale d'étanchéité et un plot d'appui, ledit profilé longitudinal possédant une section transversale ouverte et comprenant un fond et deux branches longitudinales latérales qui s'étendent respectivement depuis ce fond et de part et d'autre de celui-ci, de sorte que le fond et les deux branches forment ensemble une pince et délimitent une cavité longitudinale ouverte à l'opposé du fond, ledit élément en matériau élastomère faisant saillie depuis ce profilé longitudinal en direction de l'intérieur de ladite cavité longitudinale.

Conformément à l'invention, ledit profilé longitudinal est réalisé en matériau thermoplastique rigide et comprend, sur au moins une partie de sa longueur, au moins une portion cintrable à structure annelée, cette portion à structure annelée comprend une succession continue d'ondulations, sans discontinuité de matière, ces ondulations étant constituées d'une alternance continue de ponts et de parties de jonction, chaque pont présentant un dos qui se prolonge par deux jambes, la concavité du pont étant orientée vers l'intérieur du profilé longitudinal et chaque partie de jonction joignant l'extrémité intérieure d'une jambe d'un pont à l'extrémité intérieure d'une jambe du pont voisin, cette portion à structure annelée s'étend au moins le long de l'une des deux zones longitudinales de liaison qui s'étendent respectivement entre le fond et l'une des deux branches latérales et entre le fond et l'autres des deux branches latérales du profilé longitudinal et les plans parallèles des sillons parallèles des différentes ondulations sont orientés perpendiculairement ou sensiblement perpendiculairement à l'axe longitudinal dudit profilé longitudinal.

Grâce à ces caractéristiques de l'invention, il existe un effet de synergie entre les deux branches du profilé et les ondulations de la portion à structure annelée qui contribue à renforcer l'effet de pince du profilé et le maintien global du joint lorsque celui-ci est disposé sur un support du véhicule automobile, tel une feuillure.

En outre, la structure annelée confère au joint son caractère cintrable tant selon l'axe longitudinal du profilé que latéralement, de sorte que celui-ci peut épouser par exemple la forme courbe ou sinusoïdale du support du véhicule automobile sur lequel il est destiné à être placé.

De plus, le choix des matériaux rend le joint plus léger que ceux contenant une armature métallique et plus aisément recyclable.

Enfin, l'élément en matériau élastomère qui fait saillie dans la cavité longitudinale du joint renforce encore le maintien du joint lorsque celui-ci est placé sur la feuillure.

Selon d'autres caractéristiques avantageuses et non limitatives de l'invention, prises seules ou en combinaison :
- le profilé longitudinal comprend au moins une portion dite « lisse », exempte de structure annelée.
- le joint comprend sur au moins une partie de la longueur du profilé longitudinal, une alternance de portions à structure annelée et à section transversale ouverte et de portions lisses et à section transversale ouverte.
- le joint comprend sur au moins une partie de la longueur dudit profilé longitudinal, une portion lisse qui s'étend sur au moins une partie de la largeur dudit fond, et des portions à structure annelée qui s'étendent sur les deux branches latérales du profilé longitudinal.
- le joint comprend sur au moins une partie de la longueur dudit profilé longitudinal, une portion lisse qui s'étend sur au moins une partie de la hauteur d'au moins l'une des deux branches latérales et une portion à structure annelée qui s'étend sur la largeur dudit fond.
- ledit au moins un élément en matériau élastomère est coextrudé sur le profilé longitudinal.
- ledit profilé longitudinal comprend au moins un tube longitudinal d'amortissement en matériau élastomère qui fait saillie vers l'extérieur depuis le fond ou depuis l'une des deux branches latérales et ce tube longitudinal d'amortissement est coextrudé sur ledit profilé longitudinal.
- ledit profilé longitudinal est recouvert d'un manchon de gainage, coextrudé sur ledit profilé et en ce que ladite lèvre longitudinale d'étanchéité et/ou ledit plot d'appui est monobloc avec ledit manchon.
- le manchon de gainage comprend en outre au moins un tube longitudinal d'amortissement qui fait saillie vers l'extérieur depuis ce manchon.
- la profondeur d'une ondulation à l'extrémité libre de l'une des deux branches ou des deux branches est égale ou supérieure à la profondeur de cette même ondulation dans la partie de fond du profilé longitudinal.
- l'épaisseur du matériau thermoplastique constituant le profilé longitudinal est moindre dans les deux branches latérales que dans le fond et diminue en direction de l'extrémité libre desdites branches.
- la portion à structure annelée s'étend sur tout le profilé longitudinal et en ce que ledit profilé longitudinal est muni d'une nervure longitudinale qui fait saille vers l'extérieur.
- la face extérieure du dos et/ou la face intérieure de la partie de jonction des ondulations est plane.

L'invention concerne également un procédé de fabrication du joint d'étanchéité précité.

Conformément à l'invention, ce procédé comprend les étapes :
- d'extrusion d'un profilé longitudinal de départ, creux, de section transversale fermée, en matériau thermoplastique rigide,
- de formation sur au moins une partie de ce profilé de départ, d'au moins une portion cintrable à structure annelée, de façon à obtenir un profilé annelé,
- de découpe axiale de ce profilé annelé pour obtenir deux profilés longitudinaux à section transversale ouverte,
- de coextrusion d'au moins un élément en matériau élastomère, tel qu'une lèvre longitudinale d'étanchéité ou un plot d'appui, de façon à obtenir ledit joint d'étanchéité cintrable.

Selon d'autres caractéristiques avantageuses et non limitatives de l'invention, prises seules ou en combinaison :
- la coextrusion dudit au moins un élément en matériau élastomère est réalisée simultanément avec l'extrusion du profilé longitudinal de départ.
- la coextrusion dudit au moins un élément en matériau élastomère est réalisée après l'étape de découpe, sur le profilé longitudinal à section ouverte.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en perspective d'un premier mode de réalisation d'un joint d'étanchéité pour automobile conforme à l'invention.
La figure 2 est une vue de détail et en coupe longitudinale du joint d'étanchéité, prise selon le plan de coupe P2 de la figure 1.
La figure 3 est une vue de détail et en coupe longitudinale du joint d'étanchéité, prise selon le plan de coupe P3 de la figure 1.
La figure 4 est une vue en perspective d'une première variante de forme du profilé longitudinal d'un joint d'étanchéité conforme à l'invention.
La figure 5 est une vue en perspective d'une deuxième variante de forme du profilé longitudinal d'un joint d'étanchéité conforme à l'invention.
La figure 6 est une vue en perspective d'une troisième variante de forme du profilé longitudinal d'un joint d'étanchéité conforme à l'invention.
La figure 7 est une vue en perspective d'une quatrième variante de forme du profilé longitudinal d'un joint d'étanchéité conforme à l'invention.
La figure 8 est une vue en perspective d'un deuxième mode de réalisation d'un joint d'étanchéité pour automobile conforme à l'invention.
La figure 9 est une vue en perspective d'un troisième mode de réalisation d'un joint d'étanchéité pour automobile conforme à l'invention.
La figure 10 est une vue en perspective d'un quatrième mode de réalisation d'un joint d'étanchéité pour automobile conforme à l'invention.
La figure 11 est une vue en perspective d'un cinquième mode de réalisation d'un joint d'étanchéité pour automobile conforme à l'invention.
La figure 12 est une vue en perspective d'un sixième mode de réalisation d'un joint d'étanchéité pour automobile conforme à l'invention.
La figure 13 est une vue en perspective d'un septième mode de réalisation d'un joint d'étanchéité pour automobile conforme à l'invention.
La figure 14 est une vue en coupe transversale du joint d'étanchéité représenté sur la figure 12, prise selon le plan de coupe P 14 de la figure 12.
La figure 15 est une vue en perspective d'un huitième mode de réalisation d'un joint d'étanchéité pour automobile conforme à l'invention.
La figure 16 est une vue en coupe transversale du joint d'étanchéité de la figure 1.
La figure 17 est un schéma représentant un joint d'étanchéité conforme à l'invention monté sur une feuillure concave.
La figure 18 est un schéma illustrant une première étape d'un test.
La figure 19 est un schéma illustrant une deuxième étape d'un test.
La figure 20 est un schéma illustrant les résultats du test.
La figure 21 est un schéma représentant les différentes étapes d'un mode de réalisation du procédé de fabrication du joint d'étanchéité conforme à l'invention.

### DESCRIPTION DETAILLEE DE L'INVENTION

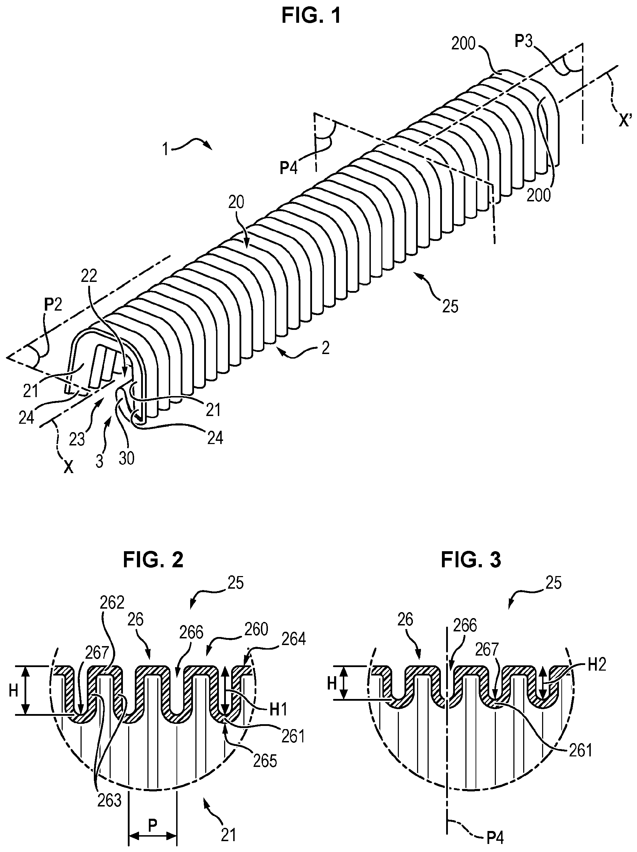

Un premier mode de réalisation d'un joint d'étanchéité pour automobile conforme à l'invention va maintenant être décrit en liaison avec la figure 1.

Sur cette figure, on peut voir que le joint d'étanchéité cintrable 1 comprend un profilé longitudinal 2 en matériau thermoplastique rigide et un élément en matériau élastomère 3, tel qu'une lèvre longitudinale d'étanchéité 30.

Le profilé longitudinal 2 s'étend selon un axe médian longitudinal X-X'. La lèvre longitudinale 30 s'étend selon le même axe X-X' et elle fait saillie le long de ce profilé.

Le profilé longitudinal 2 possède une section transversale ouverte et comprend un fond 20 et deux branches longitudinales latérales 21 qui s'étendent respectivement depuis ce fond et de part et d'autre de ce fond 20. Ces deux branches 21 et le fond 20 forment ensemble une pince et délimitent ainsi une cavité longitudinale ouverte 22.

Lorsque le profilé longitudinal 2 est positionné sur un support, tel une feuillure, du véhicule automobile, ce support (par exemple la feuillure) est reçu dans la cavité longitudinale ouverte 22.

Le profilé 2 comprend deux zones longitudinales de liaison 200 qui s'étendent respectivement entre le fond 20 et l'une des deux branches 21 et entre le fond 20 et l'autre des deux branches 21.

Par « profilé de section transversale ouverte », on entend que la cavité ouverte 22 débouche vers l'extérieur par une ouverture 23, ménagée entre les deux extrémités libres 24 des branches 21. En d'autres termes, l'ouverture 23 est située à l'opposé du fond 20.

Dans l'exemple de réalisation représenté sur la figure 1, la lèvre longitudinale 30 fait saillie depuis l'une des deux branches 21, par exemple depuis son extrémité libre 24, en direction de l'intérieur de la cavité longitudinale 22.

Bien que cela ne soit pas représenté sur les figures, il est également possible d'avoir une deuxième lèvre longitudinale 30 qui s'étend depuis l'autre des deux branches 21, également en direction de l'intérieur de la cavité longitudinale 22.

Enfin, il est possible d'avoir d'autres lèvres longitudinales 30 qui s'étendent depuis le fond 20 en direction de la cavité 22 ou bien encore d'un point quelconque du fond 20 ou des branches 21, mais en direction de l'extérieur du profilé 2.

Lorsque le joint d'étanchéité 1 est en place sur une feuillure d'un véhicule automobile, cette ou ces lèvre(s) participent à assurer l'étanchéité à l'air. La ou les lèvres 30 qui s'étendent en direction de l'intérieur de la cavité 22 contribuent également à retenir le joint 1 sur la feuillure.

Enfin, le profilé 2 comprend au moins une portion à structure annelée 25 qui s'étend au moins le long de l'une des deux zones longitudinales de liaison 200 et qui, dans l'exemple de réalisation de la figure 1, s'étend sur la totalité du profilé 2.

Comme cela apparaît mieux sur les vues de détail des figures 2 et 3 qui représentent des sections longitudinales du profilé 2, la portion à structure annelée 25 comprend une succession continue d'ondulations 26, sans discontinuité de matière, c'est-à-dire sans ouvertures ou lumières au travers du profilé 2.

Comme on peut le voir sur la figure 2, la série d'ondulations 26 est constituée d'une alternance continue de ponts 260 et de parties de jonction 261. Chaque pont 260 comprend un dos 262 qui se prolongent par deux jambes latérales 263, la concavité du pont étant orientée vers l'intérieur du profilé longitudinal 2, c'est-à-dire vers la cavité 22. Chaque partie de jonction 261 joint l'extrémité intérieure d'une jambe 263 d'un pont 260 à l'extrémité intérieure d'une jambe 263 du pont 260 voisin.

Sur les figures, chaque pont 260 présente une section en U dont les deux jambes 263 sont parallèles, toutefois d'autres formes sont envisageables, par exemple des jambes évasées ou courbes.

De façon avantageuse, la face extérieure 264 du dos 262 est plane, comme représenté sur la figure 2. Ceci permet de faciliter l'accrochage d'un revêtement coextrudé avec le profilé 2 et comme cela sera décrit ultérieurement.

La face intérieure 265 de la partie de jonction 261 (c'est-à-dire la face tournée vers la cavité 22 du profilé) peut être incurvée. Toutefois, de façon avantageuse, et bien que non représentée sur les figures, elle peut également être plane.

De préférence, les plans P4 parallèles des différents sillons parallèles 266 des ondulations 26 sont orientés de façon à être perpendiculaires ou sensiblement perpendiculaires à l'axe longitudinal X-X' du profilé 2. Par « sensiblement perpendiculaire », on entend que le plan P4 forme un angle inférieur à 10° avec l'axe X-X'.

La profondeur H (ou hauteur) d'une ondulation 26, ou plus précisément de chaque pont 260, mesurée entre le niveau de la face extérieure 264 et la face extérieure 267 de la partie de jonction 261, peut être constante sur toute la portion annelée 25 du profilé 2.

Toutefois, selon une variante de réalisation avantageuse, la profondeur d'une ondulation 26 mesurée à l'extrémité libre 24 de l'une des deux branches 21 ou des deux branches 21 (voir figure 2) présente une valeur H1, qui est supérieure à la profondeur de la même ondulation 26 mesurée au niveau du fond 20 du profilé longitudinal 2 et qui présente alors une valeur H2 (voir figure 3). En d'autres termes H1 est supérieure à H2.

De plus, l'absence de discontinuité de matière et la présence de parties annelées 25 dans les branches 21 contribue à empêcher un écartement des deux branches 21 l'une de l'autre et favorise le maintien du joint d'étanchéité 1 sur la feuillure F d'un véhicule automobile. Lorsque la profondeur H1 est supérieure à la profondeur H2, comme mentionné ci-dessus, cet effet est encore renforcé. En effet, le moment quadratique du pont 260 est accru lorsque les jambes 263 sont plus longues.

On notera toutefois que dans d'autres variantes de réalisation, H2 pourrait être supérieure à H1. Les valeurs de H1 pourraient également être différentes dans les deux branches 21.

De préférence, le pas P (voir figure 2) entre un sillon 266 et le suivant est constant. De préférence également, ce pas P est égal ou quasiment égal à la profondeur H (ou hauteur) d'une ondulation 26.

De préférence, le pas P est compris entre environ 2 mm et 6 mm. De préférence, la profondeur H d'une ondulation 26 est comprise entre environ 2 mm et 5 mm.

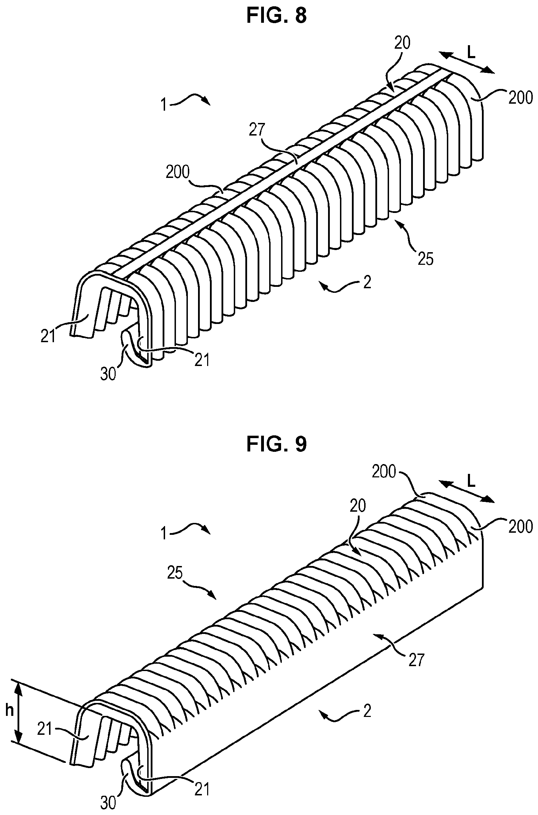

De façon avantageuse, le rapport h/H entre la hauteur h de la branche latérale 21 (voir figure 9) et la hauteur H d'une ondulation 26, ou plus précisément de chaque pont 260 est compris entre 2 et 20, de préférence encore entre 3 et 8 ou mieux entre 5 et 6.

De préférence, la hauteur h de la branche latérale 21 du profilé 2 est comprise entre environ 10 mm et 40 mm.

Enfin, de préférence, la largeur L du fond 20 (voir figure 9) est comprise entre environ 5 mm et 25 mm.

Dans l'exemple de réalisation décrit en liaison avec la figure 1, on peut voir que les deux branches 21 sont rectilignes et divergentes (en d'autres termes, elles tendent à s'écarter l'une de l'autre depuis le fond 20 en direction de leur extrémité libre 24).

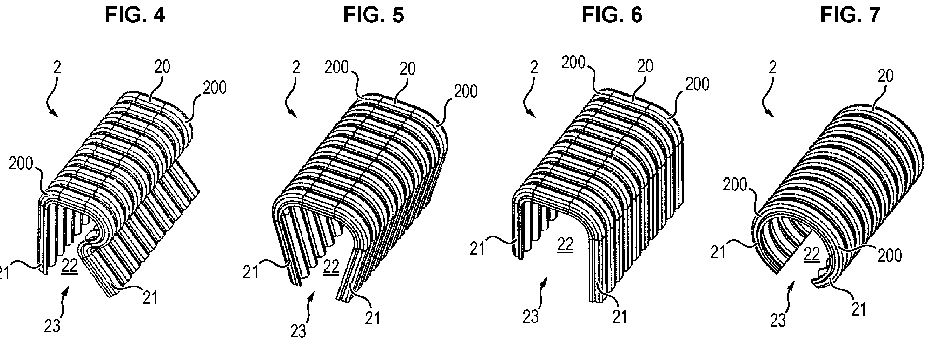

Toutefois, d'autres formes du profilé 2 sont envisageables. À titre d'exemple purement illustratif, on peut ainsi voir sur la figure 6, un mode de réalisation dans lequel les deux branches 21 sont parallèles entre elles et perpendiculaires au fond 20, sur la figure 5, un mode de réalisation dans lequel les deux branches 21 sont rectilignes et convergentes, sur la figure 4, un mode de réalisation dans lequel la branche 21 de gauche est rectiligne et perpendiculaire au fond 20, tandis que la branche 21 de droite est courbe. Dans ce dernier cas, le profilé longitudinal 2 présente une section transversale en forme de R. Une telle forme contribue à renforcer encore l'effet de pince des deux branches 21.

Enfin, sur la figure 7, on peut voir un mode de réalisation dans lequel le profilé longitudinal 2 présente une section transversale en forme de O ouvert. Dans ce cas, le fond 20 et les branches 21 sont courbes.

On comprend aisément que de nombreuses autres formes de section transversale sont envisageables pour le profilé longitudinal 2, sans sortir du cadre de l'invention comme défini par les revendications, pour autant que ce profilé présente une section transversale ouverte, comme définie précédemment.

Ces différentes variantes de réalisation dans lesquelles le profilé 2 est complétement annelé trouvent une application particulière lorsque le profilé 2 doit pouvoir se courber dans tous les plans.

Selon d'autres variantes de réalisation de l'invention qui vont maintenant être décrites, le profilé longitudinal 2 comprend à la fois au moins une portion à structure annelée 25 et au moins une portion 27 dite « lisse ».

Par « portion lisse », on entend que cette portion ne présente pas ladite structure annelée. En d'autres termes, cette portion 27 présente simplement une épaisseur du matériau thermoplastique rigide constituant le profilé longitudinal 2 à section transversale ouverte mais ne comprend pas d'ondulations 26.

Dans l'exemple de réalisation de la figure 8, le profilé longitudinal 2 comprend une portion lisse 27 qui s'étend sur au moins une partie de la largeur L du fond 20 et des portions de structure annelée 25 qui s'étendent sur les deux branches latérales 21.

Un tel profilé est utilisé par exemple lorsque l'on a besoin de la fibre neutre du profilé uniquement sur le dos (cintrage dans le plan P3) comme certains joints de coffre par exemple qui comprennent éventuellement en outre un tube d'amortissement sur le dessus du fond 20. Le plan P3 correspond au plan longitudinal médian du profilé 2 coupant le milieu du fond 20.

Dans l'exemple de réalisation de la figure 9, le profilé longitudinal 2 comprend une portion lisse 27, qui s'étend sur au moins une partie de la hauteur h d'au moins l'une des deux branches latérales 21, ici sur toute la hauteur h des deux branches latérales 21 mais non sur la zone de liaison 200 et comprend également une portion à structure annelée 25 qui s'étend sur au moins une partie de la largeur L du fond 20, ici sur toute la largeur L du fond 20 et sur la zone 200.

Un tel profilé est utilisé par exemple lorsque l'on a besoin d'une prise de rayon uniquement dans le plan P2 ou un plan parallèle à P2, la fibre neutre du profilé 2 étant alors sur l'une des deux branches (par exemple un joint de capot). Le plan P2 est situé au niveau des extrémités libres 24 des branches 21.

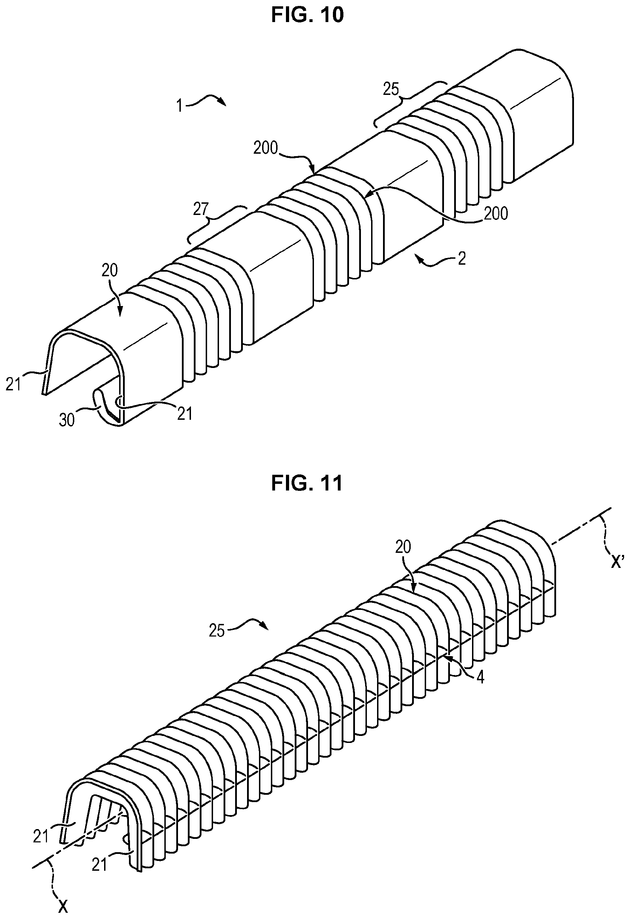

Dans l'exemple de réalisation de la figure 10, le profilé longitudinal 2 comprend une alternance de portions à structure annelée 25 et de portions lisses 27. Dans ce cas, chaque portion à structure annelée 25 s'étend sur toute la section transversale du profilé, autrement dit sur les branches 21 et le fond 20 et chaque portion lisse 27 s'étend également sur toute la section transversale du profilé, autrement dit sur les branches 21 et le fond 20. L'alternance des différentes portions se fait sur la longueur du profilé.

Ce type de disposition permet par exemple de prévoir des portions à structure annelée 25 dans les parties du joint 1 destinées à épouser un rayon de courbure d'une feuillure (par exemple dans l'angle d'une porte) et des portions lisses 27 dans les parties du joint 1 destinées à être en regard d'une partie rectiligne d'une feuillure (par exemple une partie médiane d'une porte de véhicule).

Dans l'exemple de réalisation de la figure 11, le profilé longitudinal 2 comprend une portion à structure annelée 25 sur le fond 20 et les branches 21 et ce profilé 2 est en outre muni d'une nervure longitudinale 4 qui fait saillie vers l'extérieur du profilé 2.

Cette nervure longitudinale 4 s'étend selon l'axe longitudinal X-X' du profilé 2. Dans l'exemple représenté, cette nervure longitudinale 4 est disposée sur l'une des deux branches 21. Elle pourrait également être disposée le long du fond 20.

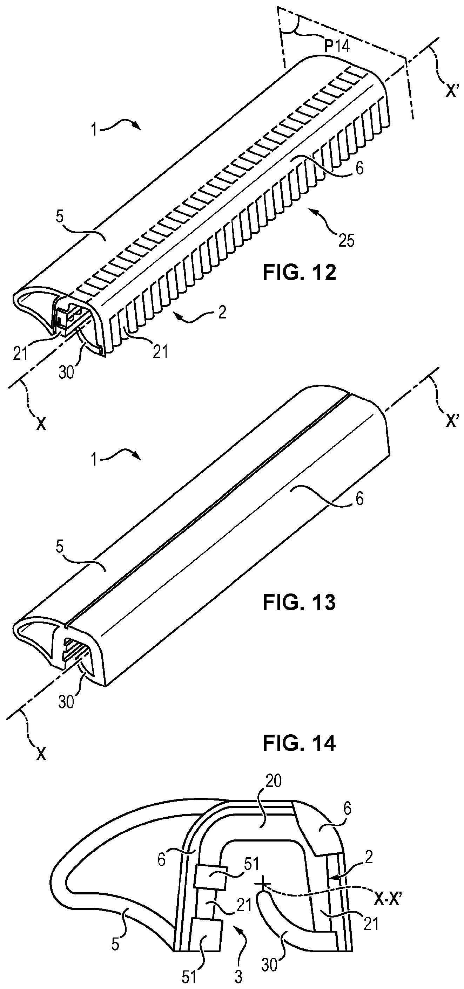

Comme on peut le voir sur les figures 12 et 14, le profilé 2 peut également être muni d'un tube d'amortissement 5 longitudinal qui fait saillie vers l'extérieur. Ce tube 5 s'étend parallèlement à l'axe longitudinal X-X' du profilé 2.

Ce tube 5 peut être disposé le long d'une branche latérale 21 ou éventuellement le long du fond 20.

Un tel type de joint 1 est destiné à être disposé sur une feuillure située dans une ouverture de la carrosserie d'un véhicule, en regard d'un ouvrant, de sorte que le tube 5 soit orienté en direction de cet ouvrant, tel qu'une porte, un capot ou un coffre. Ainsi, lorsque cet ouvrant est fermé, il vient déformer et aplatir le tube 5, qui joue alors son rôle d'amortissement.

Un tel tube 5 peut présenter une section transversale de forme quelconque. Dans l'exemple représenté cette section est sensiblement triangulaire.

De façon avantageuse, ce tube 5 est coextrudé sur le profilé 2, par exemple simultanément avec la coextrusion de la lèvre d'étanchéité 3.

Il est également possible de coextruder sur le profilé 2, un ou plusieurs autres éléments en matériau élastomère qui dans ce cas prennent la forme de plots d'appui 51 en saillie en direction de la cavité 22. Ces plots 51 renforcent le maintien du joint 1 sur le support (feuillure).

Dans les modes de réalisation qui viennent d'être décrits, la majeure partie de la structure annelée 25 du profilé 2 est visible (à l'exception des zones recouvertes par la ou les lèvre(s) 3 ou le ou les tube(s) 5 ou le ou les plots 51.

Toutefois, il est également possible de recouvrir le profilé longitudinal 2, partiellement (comme représenté sur le mode de réalisation des figures 12 ou 14) ou intégralement (comme représenté sur le mode de réalisation de la figure 13) par un revêtement 6. Un tel revêtement 6 peut par exemple être utilisé pour modifier l'apparence esthétique du profilé longitudinal 2 en cachant celui-ci. Ce revêtement 6 est coextrudé sur le profilé 2.

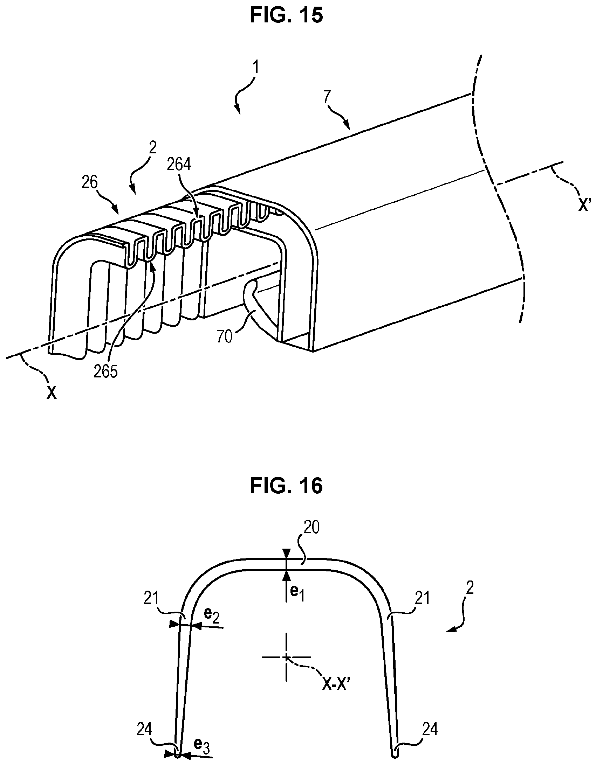

Selon une autre variante de réalisation de l'invention, représentée sur la figure 15, il est possible d'avoir un joint d'étanchéité 1, dans lequel le profilé longitudinal 2 est recouvert d'un manchon de gainage 7. Plus précisément, ce manchon de gainage 7 est coextrudé sur ce profilé 2. Dans ce cas, la lèvre longitudinale d'étanchéité est solidaire (monobloc) de ce manchon 7 et elle porte la référence numérique 70. Elle s'étend parallèlement à l'axe longitudinal X-X' du profilé 2 et peut faire saillie en tout point du manchon de gainage 7, vers l'intérieur ou l'extérieur de celui-ci. S'il y a des plots d'appui, ils sont également solidaires (monobloc) avec le manchon 7.

Un tel manchon 7 pourrait également être muni d'un tube longitudinal d'amortissement.

Dans le cas de l'utilisation d'un tel manchon de gainage 7, le profilé 2 est de préférence configuré de sorte que les faces extérieures 264 de chaque dos 262 des ondulations 26 soient planes et éventuellement que les faces intérieures 265 des parties de jonction 261 des ondulations 26 le soient également. Le manchon adhère ainsi mieux sur ces faces planes.

Inversement, l'utilisation d'un tel manchon 7 tubulaire permet de ne pas avoir de matière dans les interstices entre deux ponts 260 des ondulations 26. Ceci permet de réduire la consommation du matériau utilisé pour la fabrication de ce manchon 7, de donner au produit fini (joint 1) un aspect plus lissé que celui obtenu avec le revêtement 6 où la matière est présente dans lesdits interstices et enfin d'avoir une meilleure flexibilité qu'avec le revêtement 6.

Il est bien entendu possible de combiner sur toute la longueur d'un profilé 2, au choix, bout à bout, plusieurs des différents modes de réalisation qui viennent d'être décrits en liaison avec les figures 1 et 8 à 15, en fonction de l'usage et du positionnement envisagés pour le joint d'étanchéité 1. Dans tous les cas, la portion cintrable à structure annelée 25 s'étend au moins le long de l'une des deux zones longitudinales de liaison 200, voire sur les deux.

Enfin, de façon avantageuse et comme représenté sur la figure 16, qui représente une coupe en section transversale du profilé longitudinal 2, l'épaisseur du matériau thermoplastique constituant le profilé 2 peut varier. Ainsi par exemple, cette épaisseur peut être moindre dans les deux branches latérales 21 que dans le fond 20 (épaisseur e2 d'une branche 21 inférieure à l'épaisseur e1 du fond 20) et par ailleurs cette épaisseur peut diminuer en direction de l'extrémité libre des branches 21 (épaisseur e3 de cette même branche, mesurée au niveau de son extrémité libre inférieure à l'épaisseur e2 mesurée dans la partie médiane de la branche).

Cette variation d'épaisseur peut être symétrique ou non dans les deux branches.

Cette variation peut permettre de modifier la position de la fibre neutre du joint 1.

### Matériaux :

Le profilé 2 est réalisé en matériau thermoplastique rigide. Par « rigide », on entend un matériau structurel possédant un module de Young supérieur à 1500 MPa. A titre d'exemple ce matériau peut être un polypropylène (de la famille des polymères polyoléfines), un ABS (Acrylonitrile Butadiène Styrène de la famille des polymères styréniques), plus ou moins chargé par exemple avec du talc ou des fibres de verre.

Les autres éléments constituant le joint 1 (lèvres 30, 70, tube d'amortissement 5, plot d'appui 51, nervure longitudinale 4, revêtement extérieur 6, manchon 7) sont réalisés dans un matériau élastomère, souple, de préférence un thermoplastique élastomère (TPE), par exemple un thermoplastique vulcanisé (TPV), un thermoplastique styrène (TPS) ou une polyoléfine thermoplastique (TPO). Il est possible d'induire une porosité de ces éléments par l'utilisation d'agent d'expansion chimique ou d'agent d'expansion physiques (microcapsule de gaz). Ces éléments souples pourront être localement recouverts par coextrusion d'un second thermoplastique élastomère TPE lubrifié, afin de diminuer le coefficient de frottement avec des pièces environnantes.

Enfin, les éléments précités autres que le profilé 2 peuvent être fabriqués en élastomère de type EPDM (éthylène-propylène-diène monomère). Dans ce cas, le joint 1 est moins facilement recyclable mais conserve sa légèreté et l'avantage économique lié au fait de ne pas utiliser de métaux.

### Positionnement du profilé.

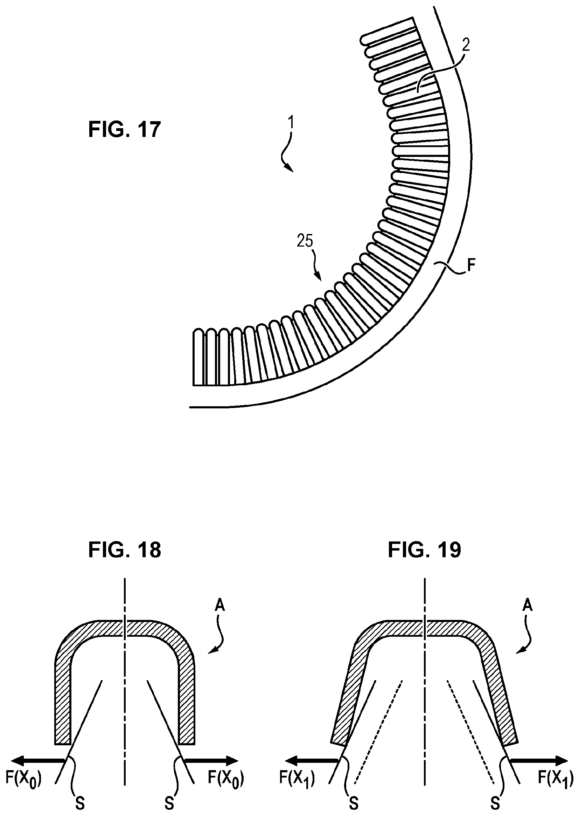

Sur la figure 17, on a représenté le joint d'étanchéité 1 positionné sur une feuillure F d'un véhicule, cette feuillure étant concave et présentant un rayon de courbure R. La feuillure F pénètre dans la cavité 22. Bien que cela ne soit pas représenté sur les figures, la feuillure F pourrait également être convexe. La portion annelée 25 du profilé 2 permet de pouvoir courber aisément le joint 1 pour suivre le rayon de courbure R, qui peut être assez faible compte-tenu de la bonne capacité de cintrage du joint conforme à l'invention.

### Tests de résistance à l'ouverture du profilé 2.

Des tests comparatifs de résistance à l'ouverture du profilé 2 ont été réalisés en comparant différents types de profilés.

Comme on peut le voir sur les figures 18 et 19, chaque profilé A testé est disposé à cheval sur un support S dont les deux parties sont écartées progressivement respectivement vers la gauche et vers la droite, pour passer d'une position d'origine X0, dans laquelle le profilé n'est pas sollicité, à une position finale X1, dans laquelle le profilé est sollicité de sorte que ses deux branches ont tendance à s'écarter l'une de l'autre.

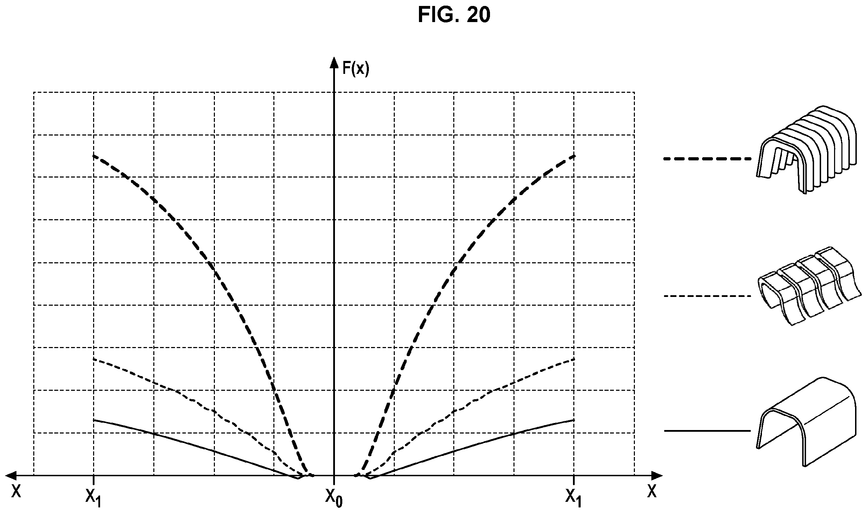

Les résultats du test sont représentés sur le graphique de la figure 20, qui montre la résistance à l'écartement F(X) dans les deux positions précitées, respectivement pour un profilé simple en U, plein (résultats en traits pleins), pour un profilé de l'art antérieur en forme d'arête de poisson (résultats en pointillés) et enfin pour un profilé conforme à l'invention à structure annelée (résultats en pointillés gras), tous trois considérés dans le même matériau thermoplastique rigide.

On observe que l'on obtient une force de résistance à l'ouverture des deux branches du profilé qui est environ 2 fois plus élevée pour un profilé en arête de poisson par rapport à un profilé en U simple et environ 6 fois plus élevée pour un profilé conforme à l'invention par rapport à un profilé en U simple.

Ces résultats démontrent l'effet de synergie qui existe entre la forme de pince du profilé conforme à l'invention et la structure annelée et démontre que ce type de profilé est particulièrement adapté pour rester immobilisé sur un support (par exemple une feuillure) d'un véhicule automobile, par rapport aux autres profilés de l'art antérieur réalisés dans le même matériau.

### Procédé de fabrication :

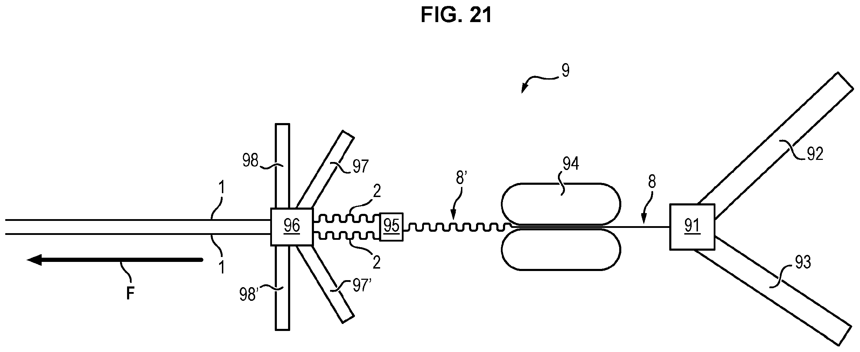

Un exemple de réalisation possible du procédé de fabrication va maintenant être décrit en liaison avec la figure 21. Il est mis en œuvre dans une installation 9.

On procède tout d'abord à l'extrusion d'un profilé longitudinal de départ 8 en matériau thermoplastique rigide, à l'aide d'une extrudeuse 91. Le profilé formé est creux et de section transversale fermée. L'extrudeuse est alimentée à partir d'un réservoir 92 de matériau thermoplastique rigide.

En parallèle, il est possible de réaliser une coextrusion d'au moins un autre élément, à l'aide de l'extrudeuse 91, alimentée à partir d'un réservoir 93 de matériau élastomère. Cet autre élément est par exemple une lèvre d'étanchéité 30 ou un plot d'appui 51, car de tels éléments peuvent être ajoutés à l'intérieur du profilé d'origine 8. De la même manière, lors de cette étape, un revêtement en matériau thermoplastique souple 6 peut être ajouté à l'intérieur et/ou à l'extérieur du profilé 8.

L'installation 9 comprend également une machine 94 de formation des portions annelées 25. On fait passer le profilé de départ 8 au travers de cette machine, de façon à former sur au moins une partie de ce profilé, une portion à structure annelée 25. Il est ainsi possible de créer sur une longueur de profilé donnée, soit intégralement une portion à structure annelée 25, soit une série de portions à structure annelée 25 et de portions lisses 27, selon les modes de réalisation décrits précédemment et de répéter ces différents motifs, pour une fabrication en série.

On obtient ainsi un profilé annelé 8', qui traverse ensuite une machine de découpe 95.1 telle machine permet de réaliser une découpe axiale du profilé de section transversale fermée, de façon à obtenir deux profilés longitudinaux 2 à section transversale ouverte, tels que décrits précédemment.

Chacun de ces profilés 2 peut ensuite passer au travers d'une seconde filière 96, alimentée par un ou plusieurs réservoirs 97, 97', 98, 98' de matériau élastomère, afin de coextruder d'autres éléments nécessaires à l'utilisation du joint 1 sur le véhicule, par exemple des lèvres externes, le tube d'amortissement 5, le revêtement 6, la nervure 4 ou la gaine 7.

Dans le cas où tous les éléments en matériau élastomère ont déjà été formés dans la première filière 91, il ne sera pas nécessaire de réaliser la deuxième étape de coextrusion dans la deuxième filière 96. Inversement, il est possible de ne pas réaliser la première coextrusion et de former tous les éléments en matériau élastomère après l'étape de découpe.

Le sens d'avancement à l'intérieur de l'installation 9 représenté par la flèche F.

## Revendications

1. Joint d'étanchéité cintrable (1) pour véhicule automobile, comprenant un profilé longitudinal (2) configuré pour être positionné sur un support du véhicule automobile, tel une feuillure, et au moins un élément en matériau élastomère (3), choisi parmi une lèvre longitudinale d'étanchéité (30, 70) et un plot d'appui (51),
ledit profilé longitudinal (2) possédant une section transversale ouverte et comprenant un fond (20) et deux branches longitudinales latérales (21) qui s'étendent respectivement depuis ce fond (20) et de part et d'autre de celui-ci, de sorte que le fond (20) et les deux branches (21) forment ensemble une pince et délimitent une cavité longitudinale (22) ouverte à l'opposé du fond (20),
ledit élément en matériau élastomère (3) faisant saillie depuis ce profilé longitudinal (2) en direction de l'intérieur de ladite cavité longitudinale (22),
ledit profilé longitudinal (2) étant réalisé en matériau thermoplastique rigide et comprenant, sur au moins une partie de sa longueur, au moins une portion cintrable à structure annelée (25),
**caractérisé**
**en ce que** cette portion à structure annelée (25) comprend une succession continue d'ondulations (26), sans discontinuité de matière, ces ondulations (26) étant constituées d'une alternance continue de ponts (260) et de parties de jonction (261), chaque pont (260) présentant un dos (262) qui se prolonge par deux jambes (263), la concavité du pont étant orientée vers l'intérieur du profilé longitudinal (2) et chaque partie de jonction (261) joignant l'extrémité intérieure d'une jambe (263) d'un pont (260) à l'extrémité intérieure d'une jambe (263) du pont (260) voisin,
**en ce que** cette portion à structure annelée (25) s'étend au moins le long de l'une des deux zones longitudinales de liaison (200) qui s'étendent respectivement entre le fond (20) et l'une des deux branches latérales (21) et entre le fond (20) et l'autres des deux branches latérales (21) du profilé longitudinal (2),
et **en ce que** les différentes ondulations (26) comprennent des sillons parallèles (266) qui sont orientés dans des plans parallèles (P4) orientés perpendiculairement ou sensiblement perpendiculairement à l'axe longitudinal (X-X') dudit profilé longitudinal (2).

2. Joint d'étanchéité pour véhicule automobile selon la revendication 1, **caractérisé en ce que** le profilé longitudinal (2) comprend au moins une portion (27) dite « lisse », exempte de structure annelée.

3. Joint d'étanchéité pour véhicule automobile selon la revendication 2, **caractérisé en ce qu'**il comprend sur au moins une partie de la longueur du profilé longitudinal (2), une alternance de portions à structure annelée (25) et à section transversale ouverte et de portions lisses (27) et à section transversale ouverte.

4. Joint d'étanchéité pour véhicule automobile selon la revendication 2, **caractérisé en ce qu'**il comprend sur au moins une partie de la longueur dudit profilé longitudinal (2), une portion lisse (27) qui s'étend sur au moins une partie de la largeur (L) dudit fond (20), et des portions à structure annelée (25) qui s'étendent sur les deux branches latérales (27) du profilé longitudinal (2).

5. Joint d'étanchéité pour véhicule automobile selon la revendication 2, **caractérisé en ce qu'**il comprend sur au moins une partie de la longueur dudit profilé longitudinal (2), une portion lisse (27) qui s'étend sur au moins une partie de la hauteur (h) d'au moins l'une des deux branches latérales (27) et une portion à structure annelée (25) qui s'étend sur la largeur (L) dudit fond (2).

6. Joint d'étanchéité pour véhicule automobile selon l'une des revendications précédentes, **caractérisé en ce que** ledit au moins un élément en matériau élastomère (3) est coextrudé sur le profilé longitudinal (2).

7. Joint d'étanchéité pour véhicule automobile selon l'une des revendications précédentes, **caractérisé en ce que** ledit profilé longitudinal (2) comprend au moins un tube longitudinal d'amortissement (5) en matériau élastomère qui fait saillie vers l'extérieur depuis le fond (20) ou depuis l'une des deux branches latérales (21) et **en ce que** ce tube longitudinal d'amortissement (5) est coextrudé sur ledit profilé longitudinal (1).

8. Joint d'étanchéité pour véhicule automobile selon l'une des revendications 1 à 5, **caractérisé en ce que** ledit profilé longitudinal (2) est recouvert d'un manchon de gainage (7), coextrudé sur ledit profilé (2) et **en ce que** ladite lèvre longitudinale d'étanchéité (70) et/ou ledit plot d'appui est monobloc avec ledit manchon (7).

9. Joint d'étanchéité pour véhicule automobile selon la revendication 8, **caractérisé en ce que** le manchon de gainage (7) comprend en outre au moins un tube longitudinal d'amortissement qui fait saillie vers l'extérieur depuis ce manchon (7).

10. Joint d'étanchéité pour véhicule automobile selon l'une des revendications précédentes, **caractérisé en ce que** la profondeur (H1) d'une ondulation (26) à l'extrémité libre (24) de l'une des deux branches (21) ou des deux branches (21) est égale ou supérieure à la profondeur (H2) de cette même ondulation (26) dans la partie de fond (20) du profilé longitudinal (2).

11. Joint d'étanchéité pour véhicule automobile selon l'une des revendications précédentes, **caractérisé en ce que** l'épaisseur du matériau thermoplastique constituant le profilé longitudinal (2) est moindre dans les deux branches latérales (21) que dans le fond (20) et diminue en direction de l'extrémité libre (24) desdites branches (27).

12. Joint d'étanchéité pour véhicule automobile selon l'une des revendications précédentes, **caractérisé en ce que** la portion à structure annelée (25) s'étend sur tout le profilé longitudinal (2) et **en ce que** ledit profilé longitudinal (2) est muni d'une nervure longitudinale (4) qui fait saille vers l'extérieur.

13. Joint d'étanchéité pour véhicule automobile selon l'une des revendications précédentes, **caractérisé en ce que** la face extérieure (264) du dos (262) et/ou la face intérieure (265) de la partie de jonction (261) des ondulations (26) est plane.

14. Procédé de fabrication du joint d'étanchéité cintrable (1) selon l'une quelconque des revendications précédentes, **caractérisé en ce qu'**il comprend les étapes :
- d'extrusion d'un profilé longitudinal de départ (8), creux, de section transversale fermée, en matériau thermoplastique rigide,
- de formation sur au moins une partie de ce profilé de départ (8), d'au moins une portion cintrable à structure annelée (25), de façon à obtenir un profilé annelé (8'),
- de découpe axiale de ce profilé annelé (8') pour obtenir deux profilés longitudinaux (2) à section transversale ouverte,
- de coextrusion d'au moins un élément en matériau élastomère (3), tel qu'une lèvre longitudinale d'étanchéité (30, 70) ou un plot d'appui (51), de façon à obtenir ledit joint d'étanchéité cintrable (1).

15. Procédé de fabrication selon la revendication 14, **caractérisé en ce que** la coextrusion dudit au moins un élément en matériau élastomère est réalisée simultanément avec l'extrusion du profilé longitudinal de départ (8).

16. Procédé de fabrication selon la revendication 14 ou 15, **caractérisé en ce que** la coextrusion dudit au moins un élément en matériau élastomère est réalisée après l'étape de découpe, sur le profilé longitudinal (2) à section ouverte.

## Patentansprüche

1. Biegbare Dichtung (1) für Kraftfahrzeug, bestehend aus einem Längsprofil (2), das so konfiguriert ist, dass es auf einer Halterung des Kraftfahrzeugs, beispielsweise einer Falz, positioniert werden kann, und mindestens einem Element aus elastomerem Material (3), das entweder eine Längsdichtungslippe (30, 70) oder einen Stützblock (51) ist,
wobei das Längsprofil (2) einen offenen Querschnitt aufweist und einen Boden (20) und zwei längliche Seitenschenkel (21) umfasst, die sich jeweils von diesem Boden (20) und zu beiden Seiten davon erstrecken, so dass der Boden (20) und die beiden Schenkel (21) zusammen eine Klammer bilden und einen Längshohlraum (22) begrenzen, der gegenüber dem Boden (20) offen ist,
wobei das Element aus elastomerem Material (3) von diesem Längsprofil (2) in Richtung des Inneren des Längshohlraums (22) vorsteht,
wobei das genannte Längsprofil (2) aus einem starren thermoplastischen Material besteht und über mindestens einen Teil seiner Länge mindestens einen biegbaren Abschnitt mit Ringstruktur (25) aufweist,
**dadurch gekennzeichnet,**
**dass** dieser Abschnitt mit Ringstruktur (25) eine kontinuierliche Abfolge von Wellen (26) ohne Materialunterbrechung umfasst, wobei diese Wellen (26) aus einer kontinuierlichen Abfolge von Brücken (260) und Verbindungsabschnitten (261) bestehen, wobei jede Brücke (260) einen Rücken (262) aufweist, der sich in zwei Schenkel (263) fortsetzt, wobei die Konkavität der Brücke zum Inneren des Längsprofils (2) hin ausgerichtet ist und jeder Verbindungsabschnitt (261) das innere Ende eines Schenkels (263) einer Brücke (260) mit dem inneren Ende eines Schenkels (263) der benachbarten Brücke (260) verbindet,
**dass** sich dieser Abschnitt mit Ringstruktur (25) mindestens entlang einer der beiden Längsverbindungszonen (200) erstreckt, die sich jeweils zwischen dem Boden (20) und einem der beiden Seitenschenkel (21) sowie zwischen dem Boden (20) und dem anderen der beiden Seitenschenkel (21) des Längsprofils (2) erstrecken,
und **dass** die verschiedenen Wellen (26) parallele Rillen (266) aufweisen, die in parallelen Ebenen (P4) ausgerichtet sind, die senkrecht oder im Wesentlichen senkrecht zur Längsachse (X-X') des Längsprofils (2) ausgerichtet sind.

2. Dichtung für Kraftfahrzeuge gemäß Anspruch 1, **dadurch gekennzeichnet, dass** das Längsprofil (2) mindestens einen sogenannten "glatten" Abschnitt (27) ohne Ringstruktur aufweist.

3. Dichtung für Kraftfahrzeuge gemäß Anspruch 2, **dadurch gekennzeichnet, dass** sie auf mindestens einem Teil der Länge des Längsprofils (2) abwechselnd Abschnitte mit Ringstruktur (25) und offenem Querschnitt und glatte Abschnitte (27) mit offenem Querschnitt aufweist.

4. Dichtung für Kraftfahrzeuge gemäß Anspruch 2, **dadurch gekennzeichnet, dass** sie auf mindestens einem Teil der Länge des Längsprofils (2) einen glatten Abschnitt (27), der sich über mindestens einen Teil der Breite (L) des Bodens (20) erstreckt, und Abschnitte mit Ringstruktur (25) aufweist, die sich über die beiden seitlichen Schenkel (27) des Längsprofils (2) erstrecken.

5. Dichtung für Kraftfahrzeuge gemäß Anspruch 2, **dadurch gekennzeichnet, dass** sie auf mindestens einem Teil der Länge des Längsprofils (2) einen glatten Abschnitt (27), der sich über mindestens einen Teil der Höhe (h) mindestens eines der beiden Seitenschenkel (27) erstreckt, und einen Abschnitt mit Ringstruktur (25) aufweist, der sich über die Breite (L) des Bodens (2) erstreckt.

6. Dichtung für Kraftfahrzeuge gemäß einem der vorstehenden Ansprüche, **dadurch gekennzeichnet, dass** das mindestens ein Element aus elastomerem Material (3) auf das Längsprofil (2) coextrudiert ist.

7. Dichtung für Kraftfahrzeuge gemäß einem der vorstehenden Ansprüche, **dadurch gekennzeichnet, dass** das Längsprofil (2) mindestens ein Längsdämpfungsrohr (5) aus elastomerem Material umfasst, das vom Boden (20) oder aus einem der beiden Seitenschenkel (21) nach außen vorsteht, und dass dieses Längsdämpfungsrohr (5) auf das Längsprofil (1) coextrudiert ist.

8. Dichtung für Kraftfahrzeuge gemäß einem der Ansprüche 1 bis 5, **dadurch gekennzeichnet, dass** das Längsprofil (2) mit einer Ummantelungshülse (7) bedeckt ist, die die auf das Profil (2) coextrudiert ist, und dass die Längsdichtlippe (70) und/oder der Stützblock einstückig mit der Hülse (7) ausgebildet ist.

9. Dichtung für Kraftfahrzeuge gemäß Anspruch 8, **dadurch gekennzeichnet, dass** die Ummantelungshülse (7) außerdem mindestens ein Längsdämpfungsrohr umfasst, das aus dieser Hülse (7) nach außen herausragt.

10. Dichtung für Kraftfahrzeuge gemäß einem der vorstehenden Ansprüche, **dadurch gekennzeichnet, dass** die Tiefe (H1) einer Welle (26) am freien Ende (24) eines der beiden Schenkel (21) oder beider Schenkel (21) gleich oder größer ist als die Tiefe (H2) derselben Welle (26) im Bodenteil (20) des Längsprofils (2).

11. Dichtung für Kraftfahrzeuge gemäß einem der vorstehenden Ansprüche, **dadurch gekennzeichnet, dass** die Dicke des thermoplastischen Materials, aus dem das Längsprofil (2) besteht, in den beiden seitlichen Schenkeln (21) geringer ist als im Boden (20) und zum freien Ende (24) der genannten Schenkel (27) hin abnimmt.

12. Dichtung für Kraftfahrzeuge gemäß einem der vorstehenden Ansprüche, **dadurch gekennzeichnet, dass** sich der Abschnitt mit Ringstruktur (25) über das gesamte Längsprofil (2) erstreckt und dass das Längsprofil (2) mit einer nach außen vorstehenden Längsrippe (4) versehen ist.

13. Dichtung für Kraftfahrzeuge gemäß einem der vorstehenden Ansprüche, **dadurch gekennzeichnet, dass** die Außenseite (264) des Rückens (262) und/oder die Innenseite (265) des Verbindungsteils (261) der Wellen (26) eben ist.

14. Verfahren zur Herstellung der biegbaren Dichtung (1) gemäß einem der vorstehenden Ansprüche, **dadurch gekennzeichnet, dass** es die folgenden Schritte umfasst:
- Extrudieren eines hohlen Längsausgangsprofils (8) mit geschlossenem Querschnitt aus starrem thermoplastischem Material,
- Ausbilden mindestens eines biegsamen Abschnitts mit Ringstruktur (25) auf mindestens einem Teil dieses Ausgangsprofils (8), um ein Ringprofil (8') zu erhalten,
- axiales Schneiden dieses Ringprofils (8'), um zwei Längsprofile (2) mit offenem Querschnitt zu erhalten,
- Coextrusion mindestens eines Elements aus elastomerem Material (3), wie beispielsweise einer Längsdichtungslippe (30, 70) oder eines Stützstücks (51), um die biegsame Dichtung (1) zu erhalten.

15. Verfahren zur Herstellung nach Anspruch 14, **dadurch gekennzeichnet, dass** die Coextrusion des mindestens eines Elements aus elastomerem Material gleichzeitig mit der Extrusion des Ausgangslängsprofils (8) durchgeführt wird.

16. Verfahren zur Herstellung nach Anspruch 14 oder 15, **dadurch gekennzeichnet, dass** die Coextrusion des mindestens eines Elements aus elastomerem Material nach demSchneideschritt auf dem Längsprofil (2) mit offenem Querschnitt durchgeführt wird.

## Claims

1. A bendable seal (1) for a motor vehicle, comprising a longitudinal profile (2) configured to be positioned on a support of the motor vehicle, such as a rebate, and at least one element made of elastomer material (3), selected from a longitudinal sealing lip (30, 70) and a support pad (51),
said longitudinal profile (2) having an open cross-section and comprising a bottom (20) and two lateral longitudinal branches (21) which respectively extend from this bottom (20) and on either side thereof, such that the bottom (20) and the two branches (21) together form a clamp and delimit a longitudinal cavity (22), opening opposite the bottom (20),
said element made of elastomer material (3) projecting from this longitudinal profile (2) towards the inside of said longitudinal cavity (22),
said longitudinal profile (2) being made of rigid thermoplastic material and comprising, over at least part of its length, at least one bendable portion with a corrugated structure (25),
**characterized in that** this corrugated-structure portion (25) comprises a continuous succession of corrugations (26), without material discontinuity, these corrugations (26) being made up of a continuous alternation of bridges (260) and junction parts (261), each bridge (260) having a back (262) which is extended by two legs (263), the concavity of the bridge being oriented towards the inside of the longitudinal profile (2) and each junction part (261) joining the inner end of a leg (263) of a bridge (260) to the inner end of a leg (263) of the neighboring bridge (260),
**in that** this corrugated-structure portion (25) extends at least along one of the two longitudinal connection regions (200) which respectively extend between the bottom (20) and one of the two lateral branches (21) and between the bottom (20) and the other of the two lateral branches (21) of the longitudinal profile (2),
and **in that** the parallel planes (P4) of the parallel grooves (266) of the various corrugations (26) are oriented perpendicularly or substantially perpendicularly to the longitudinal axis (X-X') of said longitudinal profile (2).

2. The seal for a motor vehicle according to claim 1, **characterized in that** the longitudinal profile (2) comprises at least one portion (27) called "smooth" portion, free from any corrugated structure.

3. The seal for a motor vehicle according to claim 2, **characterized in that** it comprises over at least part of the length of the longitudinal profile (2), an alternation of portions with a corrugated structure (25) and with an open cross-section and of smooth portions (27) and with an open cross-section.

4. The seal for a motor vehicle according to claim 2, **characterized in that** it comprises over at least part of the length of said longitudinal profile (2), a smooth portion (27) which extends over at least part of the width (L) of said bottom (20), and corrugated-structure portions (25) which extend over the two lateral branches (27) of the longitudinal profile (2).

5. The seal for a motor vehicle according to claim 2, **characterized in that** it comprises over at least part of the length of said longitudinal profile (2), a smooth portion (27) which extends over at least part of the height (h) of at least one of the two lateral branches (21) and a corrugated-structure portion (25) which extends over the width (L) of said bottom (2).

6. The seal for a motor vehicle according to one of the preceding claims, **characterized in that** said at least one element made of elastomer material (3) is coextruded onto the longitudinal profile (2).

7. The seal for a motor vehicle according to one of the preceding claims, **characterized in that** said longitudinal profile (2) comprises at least one longitudinal damping tube (5) made of elastomer material which projects outwards from the bottom (20) or from one of the two lateral branches (21) and **in that** this longitudinal damping tube (5) is coextruded on said longitudinal profile (1).

8. The seal for a motor vehicle according to one of claims 1 to 5, **characterized in that** said longitudinal profile (2) is covered with a sheathing sleeve (7), coextruded on said profile (2) and **in that** said longitudinal sealing lip (70) and/or said support pad is made in one piece with said sleeve (7).

9. The seal for a motor vehicle according to claim 8, **characterized in that** the sheathing sleeve (7) further comprises at least one longitudinal damping tube which projects outwards from this sleeve (7).

10. The seal for a motor vehicle according to one of the preceding claims, **characterized in that** the depth (H1) of a corrugation (26) at the free end (24) of one of the two branches (21) or of both branches (21) is equal to or greater than the depth (H2) of this same corrugation (26) in the bottom part (20) of the longitudinal profile (2).

11. The seal for a motor vehicle according to one of the preceding claims, **characterized in that** the thickness of the thermoplastic material constituting the longitudinal profile (2) is less in the two lateral branches (21) than in the bottom (20) and decreases towards the free end (24) of said branches (27).

12. The seal for a motor vehicle according to one of the preceding claims, **characterized in that** the corrugated-structure portion (25) extends over the entire longitudinal profile (2) and **in that** said longitudinal profile (2) is provided with a longitudinal rib (4) which projects outwards.

13. The seal for a motor vehicle according to one of the preceding claims, **characterized in that** the outer face (264) of the back (262) and/or the inner face (265) of the junction part (261) of the corrugations (26) is flat.

14. A method for manufacturing the bendable seal (1) according to any one of the preceding claims, **characterized in that** it comprises the steps of:
- extruding a hollow initial longitudinal profile (8) with a closed cross-section, made of rigid thermoplastic material,
- forming on at least part of this initial profile (8), at least one bendable portion with a corrugated structure (25), so as to obtain a corrugated profile (8'),
- axially cutting this corrugated profile (8') to obtain two longitudinal profiles (2) with an open cross-section,
- coextruding at least one element made of elastomer material (3), such as a longitudinal sealing lip (30, 70) or a support pad (51), so as to obtain said bendable seal (1).

15. The manufacturing method according to claim 14, **characterized in that** the coextrusion of said at least one element made of elastomer material is carried out simultaneously with the extrusion of the initial longitudinal profile (8).

16. The manufacturing method according to claim 14 or 15, **characterized in that** the coextrusion of said at least one element made of elastomer material is carried out after the cutting step, on the longitudinal profile (2) with open section.
